# EUROPEAN PATENT SPECIFICATION

(11) **EP 2 620 771 B1**
(45) Date of publication and mention of the grant of the patent: **30.08.2017**
(21) Application number: 13164976.6
(22) Date of filing: 24.07.2007
(51) Int. Cl.: G01N 33/543, G01N 35/00, C12N 15/10, G01J 3/00, G01J 3/44, G01N 21/65, G01N 15/00, G01N 1/40, B82Y 25/00, B82Y 15/00, B01L 3/00

(54) **Assay particle concentration apparatus and method**
Testpartikelkonzentrationsvorrichtung und -verfahren
Dispositif et méthode de bioessai à concentration de particules.

(30) Priority: 24.07.2006 US 832921 P; 05.04.2007 US 910246 P; 05.04.2007 US 910256 P
(43) Date of publication of application: 31.07.2013
(62) Divisional of application: 07799772.4
(73) Proprietor: Becton Dickinson and Company, Franklin Lakes NJ 07417-1180 (US)
(72) Inventor: Norton, Scott M., Durham, NC 27705 (US); Holland, Edward Robert, Portola Valley, CA 94028 (US); Walton, Ian D., Redwood City, CA 94062 (US); Cromer, Remy, Saratoga, CA 95070 (US); Stoermer, Rebecca Louise, Sunnyvale, CA 94086 (US)
(74) Representative: Eder, Michael

(56) References cited:
- GB-A- 1 452 271
- JP-A- 1 272 972
- JP-A- 4 348 277
- JP-A- 6 300 762
- JP-A- 63 106 559
- US-A- 5 238 810
- US-A- 5 238 811
- US-A1- 2004 021 073
- US-A1- 2006 240 572
- US-B1- 6 254 830
- US-B1- 6 858 440
- MOSIER-BOSS P A ET AL: "Surface-enhanced Raman spectroscopy substrate composed of chemically modified gold colloid particles immobilized on magnetic microparticles", ANALYTICAL CHEMISTRY, AMERICAN CHEMICAL SOCIETY, US LNKD- DOI:10.1021/AC048647F, vol. 77, no. 4, 15 February 2005 (2005-02-15), pages 1031-1037, XP002423178, ISSN: 0003-2700

## Description

### TECHNICAL FIELD

The present invention is directed toward an apparatus and method for concentrating and imaging particles associated with certain assays.

### BACKGROUND OF THE INVENTION

Particles and magnetic, paramagnetic or superparamagnetic particles in particular, may be used in diagnostic assays as solid phase capture or detection species. Microparticle-based assays can be divided into two main categories: homogeneous (separation-free) and heterogeneous assays.

In a homogeneous (separation-free) assay format, binding reactants are mixed and measured without any subsequent washing step prior to detection. The advantages of such a system are fast solution-phase kinetics, a simple assay format, simpler instrumentation as well as lower costs because of fewer assay steps, low volumes and low waste. Homogeneous immunoassays do not require physical separation of bound and free analyte and thus may be faster and easier to perform then heterogeneous immunoassays. Homogeneous immunoassay systems using small sample size, low reagent volume and short incubation times, provide fast turnaround time. Disadvantages of this type of assay can be limited dynamic range and sensitivity. Since there is no separation of free analyte before signal detection, sensitivity might be further compromised. Also, interferences could cause a high background signal by interaction between the sample and capture or detection reagents. Homogeneous assays are the preferred assay format in high throughput screening platforms such as AlphaScreen, SPA, fluorescent polarization and flow cytometry based assays, as well as in diagnostic assays such as particle agglutination assays with nephelometry or turbidimetry as the detection methods.

Various types of assay involve the association of optically labeled detection particles with magnetic capture particles. For example, US 2006/240,572 A1 discloses a Raman spectroscopy technique that allows an analyte, a paramagnetic particle, and a spectral enhancement particle to combine in solution and for the combination product to be localized by a magnetic field for analysis, wherein the spectral enhancement particle may be comprised of an active SERS metal particle.

When magnetic capture particles are used in a homogeneous (separation-free) assay format, the behavior of the particles in a magnetic field can be utilized to concentrate or differentiate the magnetic particles and anything which might be bound to them from other components of the assay. In assay implementations where the capture particles are bound or otherwise associated with optically labeled detection particles, it is difficult using known technologies to concentrate the capture particles at the focal plane of an optical interrogation system. Further difficulty is introduced if it is desired that the magnetic capture particles be concentrated in a relatively compact and/or small pellet for interrogation.

The present invention is directed toward overcoming one or more of the problems discussed above.

### SUMMARY OF THE INVENTION

In one aspect, the present invention includes an assay apparatus comprising:
a capillary tube (52); a sample reservoir (64); a sample cartridge (62) in which the sample reservoir (64) is formed and in which the capillary tube (52) is mounted, whereby the capillary tube (52) is in fluid communication with the reservoir (64); a holder (66) configured to receive the sample cartridge (62); a magnet (18) operatively associated with the holder (66) such that a magnetic field intersects with a portion of the capillary tube (52) defining a magnetic concentration region (20) within the capillary tube (52); and a spectrometer (40) operatively associated with the holder (66) such that the focus of the spectrometer (40) is within the magnetic concentration region (20).
In some embodiments, the spectrometer (40) is a Raman spectrometer.

The various embodiments of the assay apparatus described herein are suitable for use with any assay where optically labeled particles become associated with magnetic, paramagnetic or superparamagnetic capture particles. The term magnetic particles as used herein includes conventional magnetic particles, paramagnetic particles, superparamagnetic particles or any other type of particle affected by a magnetic field. In one embodiment which is described in detail herein, the spectrometer is a Raman spectrometer and the optically labeled detector particles are SERS nanotags.

In some embodiments, the magnet (18) and the spectrometer (40) of the assay apparatus as described herein are positioned to minimize the quantity of assay fluid outside of the magnetic concentration region (20) but within an optical path between the spectrometer (40) and the magnetic concentration region (20). In certain embodiments, the magnet (18) is positioned to cause the magnetic concentration region (20) to be formed substantially adjacent to a location where an optical path between the spectrometer (40) and the magnetic concentration region (20) initially intersects the interior of the capillary tube (52).
In these embodiments of the present invention, an intermediate step of moving the sample vessel from the holder/concentrator to a separate spectrometer is eliminated. Two significant advantages are achieved with an embodiment with combined functions. The first advantage is improved accuracy in placing the magnetic particles (or defining the magnetic concentration region) within the sample vessel, such that measurement repeatability is improved, and the possibility for false negative results (missing the concentrated pellet of magnetic particles altogether) is avoided.
The second advantage concerns eliminating the step of moving the sample vessel from the holder/concentrator to a separate spectrometer, thus sample reading is reduced to a single step operation. Furthermore, the associated risk of movement of the pellet within the sample vessel or disassociation of the pellet during transfer to the spectrometer, which may cause errors in measurement, is eliminated.

In certain embodiments, the assay apparatus may further comprise means to stimulate compact concentration operatively associated with the capillary tube (52). Preferably, the means to stimulate compact concentration is selected from a group consisting of an electromagnetic stimulator; a vibrator; an acoustic transducer and a mechanical agitator.

In another aspect, the present invention describes a method of performing an assay comprising :
associating magnetic capture particles with detection particles in a capillary tube (52) of a sample cartridge (62) in which a sample reservoir (64) is formed and in which the capillary tube (52) is mounted, whereby the capillary tube (52) is in fluid communication with the reservoir (64);
placing the sample cartridge (62) in a holder (66) configured to receive the sample cartridge (62) and hold it in a select relationship with a magnet (18) and a spectrometer (40) associated with the holder;
magnetically concentrating the magnetic capture particles in a concentration region (20) of the capillary tube (52) such that the focus of the spectrometer (40) is within the magnetic concentration region (20); and
obtaining a spectrum from the magnetic concentration region (20).

Various assays featuring the use of magnetic capture particles and optically labeled detection particles which assays may be implemented with the apparatus and methods described herein are fully described in co-pending application no. PCT/US07/61878 entitled **"SERS NANOTAG ASSAYS".**

### BRIEF DESCRIPTION OF THE DRAWINGS

Fig. 1 is a graphic representation of signal strength growth as a function of time during magnetic particle capture.
Figs. 2A-C are schematic diagrams of representative pellet compaction methods.
Fig. 3 is a schematic diagram of an apparatus featuring an optically transparent capillary tube as the sample vessel.
Fig. 4 is a schematic diagram of an alternative apparatus featuring an optically transparent capillary tube as the sample vessel.
Fig. 5 is a schematic diagram of an embodiment featuring a capillary tube sample vessel and cartridge docking.

### DETAILED DESCRIPTION OF THE INVENTION

As used throughout this application, the term "magnetic particles" shall be defined as conventional magnetic particles, paramagnetic particles, superparamagnetic particles or any other particle which is affected by a magnetic field. In some embodiments, advantages may be realized by having magnetic capture and concentration apparatus integrated with a spectrometer or other optical interrogation device. For example a fully integrated capture, concentration and imaging system minimizes the possibility of the misplacement or de-compaction of a pellet of concentrated magnetic particles since the sample vessel does not have to be moved between the concentration and optical interrogation steps. Accordingly, such integrated apparatus embodiments are described in detail below.

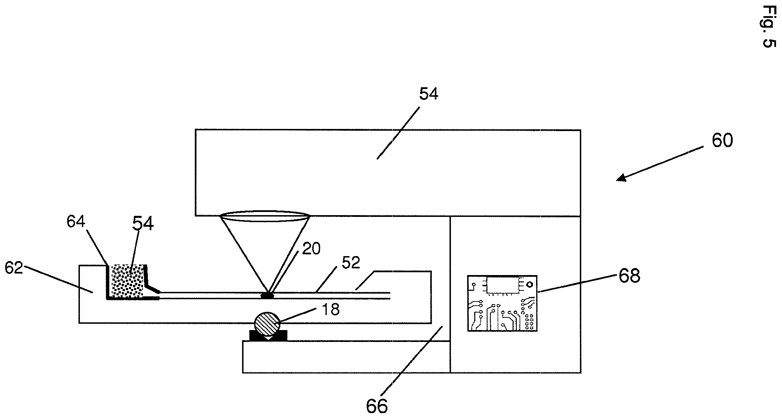

Although a spherical magnet is shown in Fig. 5, any other suitable shape and relative size of magnets, which may be either permanent magnets or electromagnets, are equally suitable for implementation of the present invention. For example, a linear magnet may be used to provide for a linear pellet which may be scanned along a length. In addition, it may be desired in certain implementations to modify the profile of the magnetic field generated by using a combination of a magnet plus a "pole piece" constructed from an appropriate ferromagnetic material, for example, steel alloys or other suitable materials known to those skilled in the art. This approach can be used to optimise the magnetic field pattern for the purpose of concentration and localisation of magnetic particles.

Additionally, capillay tubes (52) having any number of customized shapes may be used to effectively implement the apparatus. The customized shape might include a protrusion or indentation or other structure or form at or near the magnetic concentration region 20 described above. The customized shape may affect the nature of the pellet formed in the concentration step. The development of a concentrated, well-formed, and consistent magnetic pellet from magnetic capture particles and associated optical labels is a function of the magnetic field architecture as well as the sample tube morphology at the magnetic concentration region 20. Thus, the size and shape of the concentrated pellet can be altered by altering the shape of the surface the magnetic capture particles are collected upon or within. Therefore, customized tube architecture with a dimple (or cusp) or other shaped structure or form at or near the magnetic concentration region could aid in the formation of a magnetic pellet having reproducible size, shape and consistency. For example, a concave cusp may be utilized to form a spherical pellet at the bottom or side of a customized collection vessel.

The material of the capillay tubes (52) must be compatible with the reagents and analyte substances intended for use in the assay. Certain chemical or biological coatings may be applied to the vessel to prevent non specific binding of magnetic particles, optical tag or analyte to the vessel walls. The capillay tube (52) should be constructed of a non-magnetic material, such that a magnetic field applied from an external source passes through the capillay tube (52) unaffected. Furthermore, it should be designed such that consideration is given to the maximum distance that would be travelled by reagents to the localisation spot. This governs the speed and efficacy of magnetic capture, since the attractive force decreases rapidly as the distance from the magnet system is increased.

The form of the capillay tube (52) may include external geometric features, markers or indicia 22, to enhance the repeatability of positioning, and prevent incorrect vessel insertion within the holder apparatus. Positioning features could include (but are not limited to) the inclusion of flat sections, keyways, fiducial points etc. These would match similar features in a specifically designed vessel receptacle associated with magnetic localisation, spectroscopic measurement or combination of these functions, all as described herein.

In embodiments where assay interrogation is performed optically, typically a select laser output is applied to the concentrated pellet. Thus the capillay tube (52) should be appreciably transparent in the desired laser interrogation wavelength region. Moreover, it is desirable to ensure that the localising region has optical properties compatible with the lens system of the spectrometer or other detection device. Flat optical surfaces that allow the entry and exit of excitation and emitted light with minimal refraction, reflection or scattering may be desired. Alternatively, surfaces with curvature in one or more dimensions intended to function as lenses may be beneficial. Furthermore, the vessel design should allow the simultaneous presence of a magnetic localising system and operation of the spectrometer in the case where both functions are included in one instrument. The magnetic concentration region 20 can be at any position on the capillay tube (52) conducive to the ability to concentrate and localise the assay reagents and make optical measurements.

The various embodiments described herein are particularly advantageous for the concentration of magnetic capture particles associated with SERS nanotags or similar SERS taggants as the optically labeled detection particles. SERS nanotags have a SERS active core associated with a Raman reporter molecule which may be interrogated through Raman spectroscopy. Accordingly, it is useful in any implementation of the present invention which features Raman spectroscopy that the material of the capillay tube (52) be transparent to Raman light scatter. The primary limitation with respect to Raman spectroscopy is that the capillay tube (52) wall not interfere through absorption both at the laser excitation wavelengths, including, but not limited to, 633nm or 785 nm wavelengths, as well as the subsequent Raman emission wavelengths. Indeed, an ideal material would also not contribute Raman interference and/or fluorescence at these excitation wavelengths, as well. A wide variety of inexpensive and commonly used assay tubes meet this criteria.

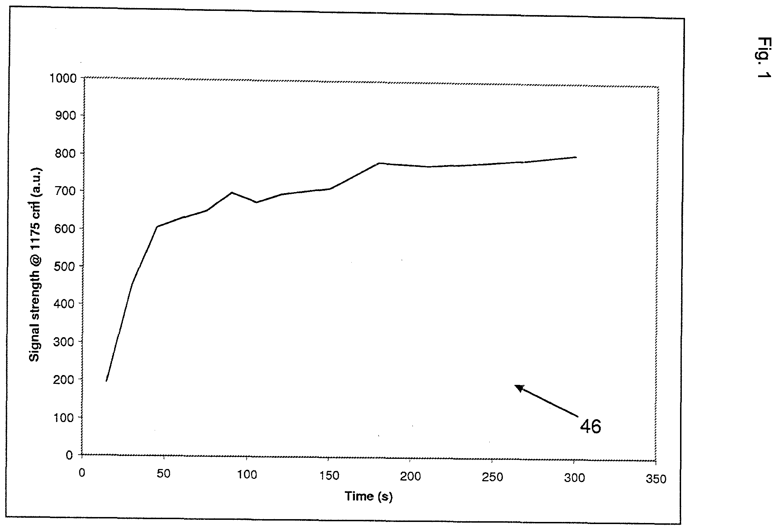

Graph 46 of Fig. 1 illustrates the progress of pellet formation during magnetic concentration as a function of time, as determined by the signal from SERS labels attached to magnetic beads in an immunological reaction scheme. It is desirable for spectroscopic analysis that the pellet size be as small as possible, since an appreciable part of the volume of captured particles may otherwise fall outside the laser illumination spot presented by typical instruments, which is generally a diameter of about 70 to 200 microns. It is also desirable that the pellet size be as small as possible for a given number of magnetic beads. This has multiple advantages. First, a dense pellet results in a smaller sampling area. In traditional spectroscopic capture, a smaller sampling area allows matching to a smaller spectrometer slit resulting in a higher spectral resolution for a given etendue (optical throughput). In addition, a denser pellet results in a higher signal-to-noise ratio as there will be a larger number of tags per unit sampling volume. A denser pellet should also improve sample-to-sample variance as a smaller pellet should match better to both the laser spot and optical collection area. Thus a collection area which is slightly larger than the pellet, should be relatively immune to signal variations from minor shape differences between pellets. Finally, a dense pellet of magnetic beads aids in obscuring the larger volume of solution, containing unbound optical label. This mechanism of obscuration could lower the detection floor, thus increasing sensitivity and leading to an improvement in the dynamic range of the test.

Pellet formation can be achieved with a static positioning between the capillay tube (52) and magnet 18. However, the magnetic particles may be concentrated to a smaller volume if the magnet 18 is moved relative to the surface of the sample vessel - a displacement of less than 1mm is sufficient to achieve measurable concentration improvement. Movement of the magnet 18, however, may be impractical, due to the requirement that the position of the magnetic concentration zone 20 be in coincidence with the laser illumination from the spectrometer 40. It is possible to stimulate tight pellet formation however, by use of techniques or methods including but not limited to mechanical, acoustic or magnetic stimulation of the capillay tube (52). Vibrational energy is sufficient to dislodge particles that have become stuck to the vessel wall before reaching the final position of lowest potential energy nearest the magnet 18 or magnetic pole piece 44. Practical methods by which this may be achieved include but are not limited to the following: Momentary vibration of the holder 12; momentary vibration of the capillay tube (52) within the sample holder 12; momentary exposure of the capillay tube (52) and contents to a high pressure acoustic wave; or the application of a moving or oscillating magnetic field, such as from an electromagnet. These methods introduce enough perturbation to facilitate the formation of a lowest energy state dense pellet. In addition, there is the further option of causing the pellet to reform by manipulation of the capillay tube (52) in order that the pellet is forced to re-form at a different location on the vessel wall 24, e.g. by removal of the tube from the magnetic field and its replacement at an alternative orientation, or by removal and reapplication of the magnet 18 or magnets at a different location on the capillay tube (52).

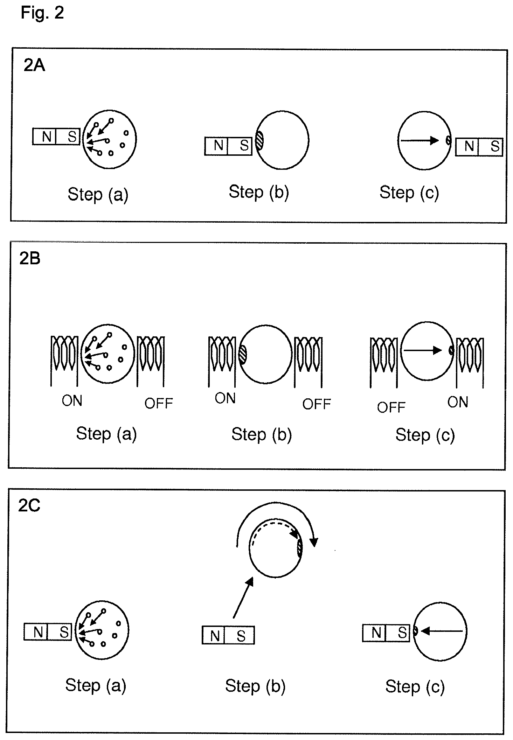

Figures 2A-C schematically illustrate three representative and non-exclusive processes for compact pellet formation. In each case, step (a) is the initial capture of reagents from the starting point of complete dispersion in the assay fluid, step (b) is the completion of initial capture and pellet formation and step (c) involves forcing the pellet to reform and concentrate at a second capture point without significant redispersion. This can be achieved by:
- A single or combination of multiple permanent magnets that are moved in relation to the sample vessel in order to effect the desired pellet formation & manipulation. (Fig. 2A)
- A combination of electromagnets to achieve the same effect. (Fig. 2B)
- Mechanical adjustment of the tube position in the receptacle, for example 180° rotation of a cylindrical sample vessel to force pellet repositioning. (Fig. 2C)

In certain embodiments of an integrated capture/interrogation unit it may be challenging to design a magnetic assembly which generates a strong enough magnetic field to pull magnetic particles down through the assay solution, to form a suitable pellet, and also provide clearance for the optical read-out. Thus, it may be advantageous to have magnetic concentration happen on one side of the capillay tube (52) while optical readout happens on the opposite side of the vessel. In such an embodiment, any curvature of the capillay tube (52) plus optical effects of assay components contained therein may act as an optical element. It is desirable as described above to achieve a small illumination spot and collection area. Accordingly, the optical system associated with the spectrometer 40 may be designed to compensate for the optical effects of the capillay tube (52).

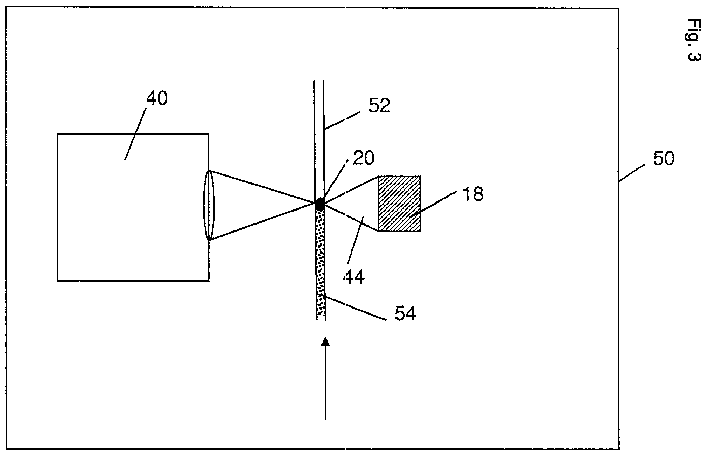

Although the embodiments of Figs. 3-5 show single capillay tubes (52), high throughput parallel assays can easily be prepared and performed by using multiple parallel assay capillay tubes holders and magnets. The magnetic concentrator step and readout could occur in parallel or serially.

A ½" spherical NdFeB (rare-earth) magnet has been successfully used experimentally to create a pellet of magnetic beads and associated SERS tags in a single pull-down step. The capillay tube (52) used was a 200uL polypropylene microcentrifuge tube with 100uL or less of reagent. As shown on graph 46 of Fig. 1, adequate pull-down of particles leading to a relatively steady state optical signal was achieved in less than one minute.

In an alternative assay system embodiment, a whole pellet may be imaged using a tunable filter (LCTF, AOTF, etc.) to create a hyper-spectral image stack. If consistent pellet formation proves to be difficult, imaging the whole pellet combined with subsequent image analysis could provide a metric for a "total optical label" that is consistent without respect to the distribution or shape of the pellet.

Similarly, a diffuse pellet, for example a linear pellet formed by a linear magnet, could be adequate for a reproducible, homogeneous, magnetic pull-down assay if spatial information is captured by the means of a scanning or wide-field imaging system. In this embodiment, the pellet may be imaged and a software analysis step employed to determine a metric for the total signal (for example the SERS signal) emitted by each pellet. This implementation shares features with DNA microarray readers commonly available, except for the need for a relatively large number of spectral channels (i.e. hyperspectral imaging). Nonetheless, for a high-throughput system utilizing a microplate configuration with multiple wells, this could offer benefits. Optical resolution, on the order of 50um, could be adequate to allow an image processing algorithm to account for pellet size and shape differences to obtain a consistent total signal metric across replicate pellets. Prior research shows that a minimum number of spectral channels (∼20-30 spectral channels), could be adequate to differentiate and quantitate SERS tags. In a wide-field embodiment this may provide for the use of liquid-crystal tunable filters (LCTF), or acousto-optical tunable filters (AOTF) to achieve spectral separation. With respect to a laser-point scanning system, a low spectral resolution dispersive spectrometer system could be adequate.

In a high-throughput detection system it may be preferable to separate the magnetic concentration step from the optical read step. Magnetic concentration freezes the chemical reaction and so all samples in a batch would require that their pellets be formed at the same time. Large process volumes may result in variation in the exact location of each pellet. One possibility to address this issue for high-throughput geometry, therefore, is to use an initial imaging step, not to gather spectral information, but merely to locate the pellets. An image processing step could extract the positions of all the pellets and use this information to position a conventional point spectrometer system under each pellet sequentially.

High throughput apparatus could be fabricated in which the capillay tubes are discrete tubes. The tubes could be transported within the apparatus to various function "stations" by a conveyor track, belt or robotic system. The precise location and timing of each sample tube could be tracked by a microprocessor system that controls the apparatus function, enabling precise control of reaction timings, temperatures, mixing and measurement etc. Such an apparatus for the invention might include provision for process steps including but not limited to
- Delivery of reagents, analyte to the sample vessel.
- Control of vessel temperature and reaction time.
- Localisation of the assay components by application of a magnetic field.
- Optimisation of the pellet formation by methods described previously.
- Optical measurement of the localised reagents within the vessel.

The sequence of steps could include the methods of localisation separate from, or coincident with making optical measurements, in the same manner as described already, thus the high throughput apparatus would incorporate receptacles for the vessels that have magnet assemblies for localisation, and/or spectrometers operatively associated with magnet assemblies. Other variations upon the basic high throughput apparatus described herein are within the scope of this disclosure.

In some embodiments, a small bead composed of a material of high magnetic permeability (e.g. nickel, cobalt, etc) may be placed in the reaction vessel. The presence of the high-permeability bead will focus the magnetic field lines thus creating a high magnetic field gradient to attract the magnetic particles. The magnetic particle / assay tag complex could associate around the bead and the whole large assembly, consisting of a large "bead" with the surrounding small magnetic particles and assay tags would be imaged. This technique could assist in achieving a reproducible spherical pellet for optimal interrogation.

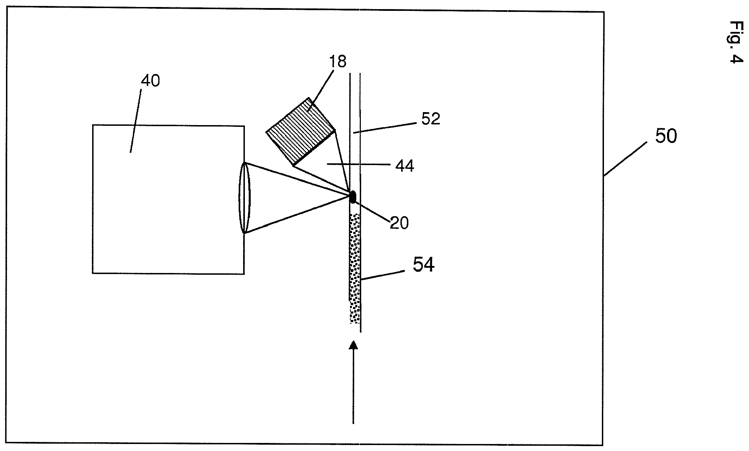

In certain embodiments it may be desirable in either a nominal or high throughput system to eliminate the need for pellet re-forming or conditioning. One suitable apparatus for use without pellet conditioning is schematically illustrated in Figs. 3 and 4. The apparatus 50 includes a capillary tube 52. The capillary tube 52 is in fluid communication with an assay particle suspension 54. As the particle suspension 54 flows through the capillary tube 52, magnetic particles are concentrated within the tube 52 by a capture magnet 18 which may or may not be associated with a pole piece 44. The capture magnet 18 serves to concentrate magnetic particles at a specific magnetic concentration region 20 within the capillary tube 52. A spectrometer or other interrogation device which may be a Raman spectrometer 40 is operatively associated with the capillary tube 52 and focused upon the magnetic concentration region 20. As shown in Figs. 3 and 4, optical interrogation may occur along an optical path which is opposite from or merely offset from the magnetic axis.

The use of a capillary tube 52 as a sample vessel provides several distinct advantages including but are not limited to:
- Precise placement of magnetic particles in relation to the small area interrogated by a typical laser based system. This will potentially improve the accuracy of measurement where quantitative determination is required.
- The sampling vessel has inherently high optical quality. For example, the capillary tube 52 may have flat sides and be made of a material which is transparent at the necessary wavelengths. The capillary tube 52 is also potentially fixed in a location relative to the magnetic and optical components.
- A capillary tube apparatus 50 allows tests to be conducted with small sample volumes of less than 100 microlitres and small reagent quantities which may result in improved sensitivity.
- A capillary tube apparatus 50 permits rapid collection of a sample pellet with no conditioning required. The pellet is contained in a small area and is inherently tightly packed. The magnetic element is not required to provide attractive forces at great distance since the capillary tube wall and magnetic pole are arranged in close registration (for example, with a separation of not more than 1mm). This is advantageous since the attractive force experienced by magnetic particles falls rapidly with increasing distance from the pole or pole piece 44 of a magnet system.
- The volume of fluid interrogated by the reader is reduced significantly by the use of a narrow capillary vessel. Hence the quantity of unbound tag, which would otherwise contribute an unwanted "background signal" may be made very small.
- Use of electromagnets in the capture mechanism may allow collection of magnetic particles at the concentration region and subsequent flushing of particles from this region. In this way the vessel could be used serially to read from multiple sample assay reactions. This could operate on demand, or semi-continuously as part of a larger automated system in which many tests are run in sequence.
- A capillary tube apparatus 50 could also be used to implement a lateral flow assay device. In a lateral flow assay embodiment, a capillary tube associated with a magnet replaces the typical cellulose fiber strip or other matrix. A reservoir or reservoir pad containing adsorbed reagents (for example: SERS tags and magnetic particles) may be arranged in communication with one opening in the capillary tube. Introduction of analyte fluid to the reservoir results in release of the particulate reagents, which are caused to flow along the capillary with the analyte in solution. The magnet traps magnetic particles at a precisely defined location. Any tags such as SERS particles attached to magnetic particles may be detected by means of a Raman spectrometer directed at the capture point. Precise location of the capture point in relation to the spectrometer may be effected through the magnet system.

The capillary tube-based lateral flow embodiment described immediately above is suitable for use as an integrated assay system which could if desired be developed in a very compact form factor for highly accurate and repeatable field assay usage. An integrated system 60 consistent with this embodiment is schematically illustrated in Fig. 5. In the Fig. 5 embodiment, the capillary tube 52 is mounted in a sample cartridge 62. The capillary tube 52 is in communication with a sample reservoir 64 formed in the sample cartridge 62. The assay particle suspension 54 necessary to perform an assay including magnetic particles and reagents may be mixed in the sample reservoir 64. Since the sample reservoir 64 is in fluid communication with the capillary tube 52, fully reacted assay suspension 54 is readily drawn toward the magnetic concentration region 20 by capillary action. In addition, excess assay particles are wicked away from the magnetic concentration region 20 minimizing background signal. At the magnetic capture region 20, a magnet 18 will concentrate magnetic particles as described above at the focal plane of a spectrometer 40 where optical interrogation of the concentrated sample may occur.

The integrated system 60 of Fig. 5 may be fabricated with a cartridge docking receptacle 66 configured to accurately receive and position the cartridge 62 so that the magnetic capture region 20 is properly aligned. The system 60 may also include data processing elements 68 associated with the spectrometer that enable the apparatus 60 to be used as a portable and potentially handheld stand-alone assay device.

## Claims

1. An assay apparatus (60) comprising:
a capillary tube (52);
a sample reservoir (64);
a sample cartridge (62) in which the sample reservoir (64) is formed and in which the capillary tube (52) is mounted, whereby the capillary tube (52) is in fluid communication with the reservoir (64);
a holder (66) configured to receive the sample cartridge (62);
a magnet (18) operatively associated with the holder (66) such that a magnetic field intersects with a portion of the capillary tube (52) defining a magnetic concentration region (20) within the capillary tube (52); and
a spectrometer (40) operatively associated with the holder (66) such that the focus of the spectrometer (40) is within the magnetic concentration region (20).

2. The assay apparatus of claim 1, wherein the spectrometer (40) is a Raman spectrometer.

3. The assay apparatus of any one of claims 1 or 2, further comprising means to stimulate compact concentration operatively associated with the capillary tube (52);
preferably wherein the means to stimulate compact concentration is selected from a group consisting of an electromagnetic stimulator; a vibrator; an acoustic transducer and a mechanical agitator.

4. The assay apparatus of any one of claims 1 to 3, wherein the magnet (18) and the spectrometer (40) are positioned to minimize the quantity of assay fluid outside of the magnetic concentration region (20) but within an optical path between the spectrometer (40) and the magnetic concentration region (20).

5. The assay apparatus of any one of claims 1 to 4, wherein the magnet (18) is positioned to cause the magnetic concentration region (20) to be formed substantially adjacent to a location where an optical path between the spectrometer (40) and the magnetic concentration region (20) initially intersects the interior of the capillary tube (52).

6. The assay apparatus of any one of claims 1 to 5, wherein the capillary tube (52) further comprises an internal wall wherein a portion of the internal wall which is initially intersected by an optical path from the spectrometer (40) defines an interface and wherein the magnetic concentration region (20) is formed substantially adjacent to the interface.

7. A method of performing an assay comprising:
associating magnetic capture particles with detection particles in a capillary tube (52) of a sample cartridge (62) in which a sample reservoir (64) is formed and in which the capillary tube (52) is mounted, whereby the capillary tube (52) is in fluid communication with the reservoir (64);
placing the sample cartridge (62) in a holder (66) configured to receive the sample cartridge (62) and hold it in a select relationship with a magnet (18) and a spectrometer (40) associated with the holder;
magnetically concentrating the magnetic capture particles in a concentration region (20) of the capillary tube (52) such that the focus of the spectrometer (40) is within the magnetic concentration region (20);
and obtaining a spectrum from the magnetic concentration region (20).

8. The method of claim 7 wherein the spectrum obtained from the magnetic concentration region (20) is a Raman spectrum, preferably wherein the Raman spectrum is obtained from a SERS taggant associated with the magnetic capture particles in the magnetic concentration region (20).

9. The method of performing an assay of any one of claims 7 to 8 further comprising stimulating compact concentration of the magnetic capture particles in the concentration region (20);
preferably wherein the stimulation step comprises at least one of mechanically agitating the capillary tube (52); vibrating the capillary tube (52) ; projecting acoustic wave through the capillary tube (52) and passing a moving magnetic field through a portion of the capillary tube (52).

10. The method of performing an assay according to any one of claims 7 to 9 wherein the magnet (18) and the spectrometer (40) are positioned to minimize the quantity of assay fluid outside of the magnetic concentration region (20) but within an optical path between the spectrometer (40) and the magnetic concentration region (20).

11. The method of performing an assay according to any one of claims 7 to 10 wherein the magnet (18) is positioned to cause the magnetic concentration region (20) to be formed substantially adjacent to a location where an optical path between the spectrometer (40) and the magnetic concentration region (20) initially intersects the interior of the capillary tube (52).

12. The method of performing an assay according to any one of claims 7 to 11 wherein the capillary tube (52) further comprises an internal wall wherein a portion of the internal wall which is initially intersected by an optical path from the spectrometer (40) defines an interface and wherein the magnetic concentration region (20) is formed substantially adjacent to the interface.

13. The method of performing an assay according to any one of claims 9 to 12 wherein the stimulation step comprises at least one of repositioning the capillary tube (52) with respect to the magnet (18); repositioning the magnet (18) with respect to the capillary tube (52) and applying a magnetic field from more than one magnet (18) to the capillary tube (52).

## Patentansprüche

1. Assay-Gerät (60), umfassend:
ein Kapillarröhrchen (52);
ein Probengefäß (64);
eine Probenkartusche (62), in der das Probengefäß (64) gebildet wird, und in der das Kapillarröhrchen (52) eingesetzt wird, wobei das Kapillarröhrchen (52) in fluider Kommunikation mit dem Gefäß (64) steht;
eine Haltevorrichtung (66), die darauf ausgelegt ist, die Probenkartusche (62) aufzunehmen;
einen Magneten (18), der derart in wirkender Verbindung mit der Haltevorrichtung (66) steht, dass ein magnetisches Feld sich mit einem Abschnitt des Kapillarröhrchens (52) schneidet, wobei dadurch eine magnetische Konzentrationsregion (20) innerhalb des Kapillarröhrchens (52) gebildet wird; und
ein Spektrometer (40), das derart wirkend mit der Haltevorrichtung (66) in Verbindung steht, dass der Fokus des Spektrometers (40) sich innerhalb der magnetischen Konzentrationsregion (20) befindet.

2. Assay-Gerät nach Anspruch 1, wobei das Spektrometer (40) ein Raman-Spektrometer ist.

3. Assay-Gerät nach einem der Ansprüche 1 oder 2, ferner umfassend Mittel zum Stimulieren kompakter Konzentrierung, die in wirkender Verbindung mit dem Kapillarröhrchen (52) stehen;
wobei vorzugsweise die Mittel zum Stimulieren kompakter Konzentrierung ausgewählt sind aus einer Gruppe bestehend aus einem elektromagnetischen Stimulator; einem Vibrator; einem akustischen Wandler und einem mechanischen Mischer.

4. Assay-Gerät nach einem der Ansprüche 1 bis 3, wobei der Magnet (18) und das Spektrometer (40) derart angeordnet sind, dass die Menge an Testfluid außerhalb der magnetischen Konzentrationsregion (20), jedoch innerhalb eines Lichtweges zwischen dem Spektrometer (40) und der magnetischen Konzentrationsregion (20) minimiert wird.

5. Assay-Gerät nach einem der Ansprüche 1 bis 4, wobei der Magnet (18) derart angeordnet ist, dass die magnetische Konzentrationsregion (20) im Wesentlichen angrenzend an eine Stelle gebildet wird, an der ein Lichtweg zwischen dem Spektrometer (40) und der magnetischen Konzentrationsregion (20) anfänglich das Innere des Kapillarröhrchens schneidet (52).

6. Assay-Gerät nach einem der Ansprüche 1 bis 5, wobei das Kapillarröhrchen (52) ferner eine Innenwand umfasst, wobei ein Abschnitt der Innenwand, die anfänglich von einem Lichtweg von dem Spektrometer (40) geschnitten wird, eine Grenzfläche definiert, und wobei die magnetische Konzentrationsregion (20) im Wesentlichen angrenzend an die Grenzfläche gebildet wird.

7. Verfahren zum Durchführen eines Assays, umfassend:
Inzusammenhangbringen magnetischer Fangpartikel mit Detektionspartikeln in einem Kapillarröhrchen (52) einer Probenkartusche (62), in der ein Probengefäß (64) gebildet wird, in das das Kapillarröhrchen (52) eingesetzt wird, wobei das Kapillarröhrchen (52) in fluider Kommunikation mit dem Gefäß (64) steht;
Platzieren der Probenkartusche (62) in einer Haltevorrichtung (66), die darauf ausgelegt ist, die Probenkartusche (62) aufzunehmen und diese in einer ausgewählten Beziehung mit einem Magneten (18) und einem mit der Haltervorrichtung assoziierten Spektrometer (40) zu halten;
magnetisches Konzentrieren der magnetischen Fangpartikel in einer Konzentrationsregion (20) des Kapillarröhrchens (52) derart, dass der Fokus des Spektrometers (40) sich innerhalb der magnetischen Konzentrationsregion (20) befindet;
und Erhalten eines Spektrums von der magnetischen Konzentrationsregion (20).

8. Verfahren nach Anspruch 7, wobei das von der magnetischen Konzentrationsregion (20) erhaltene Spektrum ein Raman-Spektrum ist, wobei vorzugsweise das Raman-Spektrum von einem SERS-Marker erhalten wird, der mit den magnetischen Fangpartikeln in der magnetischen Konzentrationsregion (20) assoziiert ist.

9. Verfahren zum Durchführen eines Assays nach einem der Ansprüche 7 bis 8, ferner umfassend Stimulieren kompakter Konzentrierung der magnetischen Fangpartikel in der Konzentrationsregion (20);
wobei vorzugsweise der Stimulationsschritt mindestens eines von mechanischem Mischen des Kapillarröhrchens (52); Vibrieren des Kapillarröhrchens (52); Projizieren einer akustischen Welle durch das Kapillarröhrchen (52) und Passieren eines sich bewegenden magnetischen Feldes durch einen Abschnitt des Kapillarröhrchens (52) umfasst.

10. Verfahren zum Durchführen eines Assays nach einem der Ansprüche 7 bis 9, wobei der Magnet (18) und das Spektrometer (40) derart angeordnet sind, dass die Menge an Assay-Fluid außerhalb der magnetischen Konzentrationsregion (20), jedoch innerhalb eines Lichtweges zwischen dem Spektrometer (40) und der magnetischen Konzentrationsregion (20) minimiert wird.

11. Verfahren zum Durchführen eines Assays nach einem der Ansprüche 7 bis 10, wobei der Magnet (18) derart angeordnet ist, dass die magnetische Konzentrationsregion (20) im Wesentlichen angrenzend an eine Stelle gebildet wird, an der ein Lichtweg zwischen dem Spektrometer (40) und der magnetischen Konzentrationsregion (20) anfänglich das Innere des Kapillarröhrchens schneidet (52).

12. Verfahren zum Durchführen eines Assays nach einem der Ansprüche 7 bis 11, wobei das Kapillarröhrchen (52) ferner eine Innenwand umfasst, wobei ein Abschnitt der Innenwand, die anfänglich von einem Lichtweg von dem Spektrometer (40) geschnitten wird, eine Grenzfläche definiert, und wobei die magnetische Konzentrationsregion (20) im Wesentlichen angrenzend an die Grenzfläche gebildet wird.

13. Verfahren zum Durchführen eines Assays nach einem der Ansprüche 9 bis 12, wobei der Stimulationsschritt mindestens eines von Neupositionieren des Kapillarröhrchens (52) in Bezug auf den Magneten (18); Neupositionieren des Magneten (18) in Bezug auf das Kapillarröhrchen (52) und Anwenden eines Magnetfeldes von mehr als einem Magneten (18) auf das Kapillarröhrchen (52) umfasst.

## Revendications

1. Appareil de dosage (60) comprenant :
un tube capillaire (52) ;
un réservoir d'échantillon (64) ;
une cartouche d'échantillon (62) dans laquelle est formé le réservoir d'échantillon (64) et dans laquelle est monté le tube capillaire (52), moyennant quoi le tube capillaire (52) est en communication fluidique avec le réservoir (64) ;
un support (66) conçu pour recevoir la cartouche d'échantillon (62) ;
un aimant (18) associé fonctionnellement au support (66) de telle sorte qu'un champ magnétique croise une partie du tube capillaire (52) en définissant une région de concentration magnétique (20) au sein du tube capillaire (52) ; et
un spectromètre (40) associé fonctionnellement au support (66) de telle sorte que la mise au point du spectromètre (40) se trouve au sein de la région de concentration magnétique (20).

2. Appareil de dosage selon la revendication 1, dans lequel le spectromètre (40) est un spectromètre Raman.

3. Appareil de dosage selon l'une quelconque des revendications 1 ou 2, comprenant en outre un moyen de stimuler une concentration compacte associé fonctionnellement au tube capillaire (52) ;
de préférence dans lequel le moyen de stimuler une concentration compacte est choisi parmi un groupe constitué d'un stimulateur électromagnétique ; un vibrateur ; un transducteur acoustique et un agitateur mécanique.

4. Appareil de dosage selon l'une quelconque des revendications 1 à 3, dans lequel l'aimant (18) et le spectromètre (40) sont positionnés de façon à minimiser la quantité de fluide de dosage à l'extérieur de la région de concentration magnétique (20), mais au sein d'une trajectoire optique entre le spectromètre (40) et la région de concentration magnétique (20).

5. Appareil de dosage selon l'une quelconque des revendications 1 à 4, dans lequel l'aimant (18) est positionné pour amener la région de concentration magnétique (20) à être formée essentiellement adjacente à un emplacement où une trajectoire optique entre le spectromètre (40) et la région de concentration magnétique (20) croise initialement l'intérieur du tube capillaire (52).

6. Appareil de dosage selon l'une quelconque des revendications 1 à 5, dans lequel le tube capillaire (52) comprend en outre une paroi interne, dans lequel une partie de la paroi interne qui est initialement croisée par une trajectoire optique du spectromètre (40) définit une interface et dans lequel la région de concentration magnétique (20) est formée essentiellement adjacente à l'interface.

7. Procédé d'exécution d'un dosage comprenant :
l'association de particules magnétiques de capture à des particules de détection dans un tube capillaire (52) d'une cartouche d'échantillon (62) dans laquelle est formé un réservoir d'échantillon (64) et dans laquelle est monté le tube capillaire (52), moyennant quoi le tube capillaire (52) est en communication fluidique avec le réservoir (64) ;
la mise en place de la cartouche d'échantillon (62) dans un support (66) conçu pour recevoir la cartouche d'échantillon (62) et la maintenir dans une relation sélectionnée avec un aimant (18) et un spectromètre (40) associé au support ;
la concentration par voie magnétique des particules magnétiques de capture dans une région de concentration (20) du tube capillaire (52) de telle sorte que la mise au point du spectromètre (40) se trouve au sein de la région de concentration magnétique (20) ;
et l'obtention d'un spectre à partir de la région de concentration magnétique (20).

8. Procédé selon la revendication 7, dans lequel le spectre obtenu à partir de la région de concentration magnétique (20) est un spectre Raman, de préférence dans lequel le spectre Raman est obtenu à partir d'un traceur SERS associé aux particules magnétiques de capture dans la région de concentration magnétique (20).

9. Procédé d'exécution d'un dosage selon l'une quelconque des revendications 7 à 8, comprenant en outre la stimulation d'une concentration compacte des particules magnétiques de capture dans la région de concentration (20) ;
de préférence dans lequel l'étape de stimulation comprend au moins une opération parmi une agitation mécanique du tube capillaire (52) ; une vibration du tube capillaire (52) ; la projection d'une onde acoustique à travers le tube capillaire (52) et le passage d'un champ magnétique mobile à travers une partie du tube capillaire (52).

10. Procédé d'exécution d'un dosage selon l'une quelconque des revendications 7 à 9, dans lequel l'aimant (18) et le spectromètre (40) sont positionnés de façon à minimiser la quantité de fluide de dosage à l'extérieur de la région de concentration magnétique (20), mais au sein d'une trajectoire optique entre le spectromètre (40) et la région de concentration magnétique (20).

11. Procédé d'exécution d'un dosage selon l'une quelconque des revendications 7 à 10, dans lequel l'aimant (18) est positionné pour amener la région de concentration magnétique (20) à être formée essentiellement adjacente à un emplacement où une trajectoire optique entre le spectromètre (40) et la région de concentration magnétique (20) croise initialement l'intérieur du tube capillaire (52).

12. Procédé d'exécution d'un dosage selon l'une quelconque des revendications 7 à 11, dans lequel le tube capillaire (52) comprend en outre une paroi interne, dans lequel une partie de la paroi interne qui est initialement croisée par une trajectoire optique provenant du spectromètre (40) définit une interface et dans lequel la région de concentration magnétique (20) est formée essentiellement adjacente à l'interface.

13. Procédé d'exécution d'un dosage selon l'une quelconque des revendications 9 à 12, dans lequel l'étape de stimulation comprend au moins une opération parmi un repositionnement du tube capillaire (52) par rapport à l'aimant (18) ; un repositionnement de l'aimant (18) par rapport au tube capillaire (52) et l'application d'un champ magnétique depuis plus d'un aimant (18) vers le tube capillaire (52).
